# EUROPEAN PATENT SPECIFICATION

(11) **EP 3 869 253 B1**
(45) Date of publication and mention of the grant of the patent: **21.05.2025**
(21) Application number: 21151492.2
(22) Date of filing: 14.01.2021
(51) Int. Cl.: G02B 6/44

(54) **CONNECTION STRUCTURE AND OPTICAL CABLE CONNECTION BOX**
ANSCHLUSSSTRUKTUR UND GLASFASERKABELANSCHLUSSKASTEN
STRUCTURE DE CONNEXION ET BOÎTE DE CONNEXION DE CÂBLE OPTIQUE

(30) Priority: 20.02.2020 CN 202020191330 U
(43) Date of publication of application: 25.08.2021
(73) Proprietor: HUAWEI TECHNOLOGIES CO., LTD., Shenzhen, Guangdong 518129 (CN)
(72) Inventor: CHEN, Yangquan, Shenzhen, Guangdong 518129 (CN); XIONG, Wei, Shenzhen, Guangdong 518129 (CN); PEI, Guohua, Shenzhen, Guangdong 518129 (CN); ZHANG, Jinjin, Shenzhen, Guangdong 518129 (CN); YIN, Weiwei, Shenzhen, Guangdong 518129 (CN)
(74) Representative: Maiwald GmbH

(56) References cited:
- US-A- 4 428 645
- US-A- 4 830 457
- US-A- 5 838 871
- US-A- 6 094 518
- US-A1- 2010 178 021

## Description

### TECHNICAL FIELD

This application relates to the field of communications technologies, and in particular, to a connection structure.

### BACKGROUND

An optical cable connection box mainly implements a protection function on optical cables on an optical fiber network after the optical cables are connected to each other. Currently, when a prefabricated optical cable is deployed in the home, cables with different lengths need to be provided according to distances to users. For example, CORNING cable lengths on an existing network are serialized in specifications: 33/55/105/160/350. In actual application, a site engineer usually selects a longer optical cable after estimation, causing redundancy for optical fibers of the optical cable. One type of optical cable connection box can provide adapter connection but does not support optical fiber splicing and storage, causing use inconvenience. Another type of optical cable connection box is provided with a splicing tray, and supports optical fiber splicing and storage in the splicing tray. However, the optical cable connection box with the splicing tray has a relatively large volume.

US 5 838 871 A describes an optical fiber cable connection organizer device that includes a support assembly with lateral accessways for the fibers of the cables, an arrangement for holding splices between the fibers and an arrangement for stowing a surplus length of the jointed fibers. It further includes two sets of magazines for stowing additional slack in the fibers from the two cables.

### SUMMARY

Embodiments of this application provide a connection structure and an optical cable connection box, to reduce a volume and also implement storage of redundant optical fibers. The invention is defined by the appended claims. Embodiments and examples not covered by the claims are meant to illustrate, and facilitate the understanding of, the claimed invention.

According to a first aspect according to claim 1, a connection structure is provided, including a splicing region and a fiber management region that are disposed with a distance therebetween along a circumferential direction of the connection structure. The connection structure is a cylinder-like object and the circumferential direction is a direction circling a central axis of the connection structure, wherein the splicing region is usable to splice optical fibers in different optical cables by using a splicing device to implement connection between the different optical cables and wherein the fiber management region is configured to store redundant optical fibers of optical cables, A fiber routing path passing through the connection structure in the splicing region and the connection structure in the fiber management region is further disposed in the connection structure, so that an optical fiber extends into the fiber management region for storage through the fiber routing path from the splicing region.

The connection structure includes the splicing region and the fiber management region that are disposed with a distance therebetween along the circumferential direction of the connection structure. In other words, the splicing region and the fiber management region are located on different planes. Because optical fiber splicing and storage do not need to be performed in a same region in the connection structure, space of the connection structure can be effectively used. In this way, the connection structure has a compact structure, thereby reducing a volume of the connection structure. In addition, optical fiber splicing and optical fiber storage are separated in the connection structure according to functional regions, which facilitates work of an operator, thereby improving optical cable connection efficiency.

According to the first aspect, the fiber routing path is disposed in a groove on an outer sidewall of the connection structure, to facilitate extension of the optical fiber from the splicing region to the fiber management region and also protect the optical fiber.

According to the first aspect, a first positioning plate and a second positioning plate protrude from a sidewall of the fiber routing path. The first positioning plate and the second positioning plate are disposed opposite each other. A groove is formed between the first positioning plate and the second positioning plate. The first positioning plate and the second positioning plate are configured to: prevent the optical fiber from coming out of the fiber routing path and protect the optical fiber. The groove is configured to facilitate the optical fiber to enter the fiber routing path.

With reference to the first aspect, in a first possible implementation of the first aspect, a depression is further disposed in the splicing region on the connection structure. The depression includes two sidewalls and a bottom wall. The bottom wall is connected between the two sidewalls. A cable leading-in path is further disposed in the connection structure. The cable leading-in path passes through the sidewalls of the depression. The fiber routing path passes through the bottom wall of the depression, to facilitate the optical fiber in an optical cable passing through the cable leading-in path to enter the fiber routing path.

With reference to the first aspect or the first possible implementation of the first aspect, in a second possible implementation of the first aspect, the cable leading-in path is located at an end of the connection structure, and the cable leading-in path is coaxially disposed with the connection structure. In this way, a central axis of the optical cable passing through the cable leading-in path, a central axis of the cable leading-in path, and a central axis of the connection structure can be overlapped, thereby improving transmission quality of an optical signal.

With reference to the first aspect or the first to the second possible implementations of the first aspect, in a third possible implementation of the first aspect, the connection structure further includes a cabling path. The cabling path is disposed in a groove on the bottom wall of the depression close to the cable leading-in path. The cabling path is connected to the fiber routing path. A cabling path disposed in a clearance mode is used between the fiber routing path and the cable leading-in path, so that smooth cabling is implemented on the optical fiber, thereby reducing a risk of a sudden change to an optical signal.

With reference to the first aspect or the first to the third possible implementations of the first aspect, in a fourth possible implementation of the first aspect, the sidewall includes a cushion surface. The cushion surface is an arc surface protruding to an interior of the depression, and is used to cushion a bending angle of the optical fiber to prevent the sudden change to the optical signal.

With reference to the first aspect or the first to the fourth possible implementations of the first aspect, in a fifth possible implementation of the first aspect, a stop portion protrudes from a sidewall of the cable leading-in path close to the depression, and is configured to abut against the optical cable, to avoid forward movement of the optical cable, thereby improving connection reliability of the optical cable in the connection structure.

With reference to the first aspect or the first to the fifth possible implementations of the first aspect, in an sixth possible implementation of the first aspect, the connection structure includes an inner support container and a clamping apparatus. The splicing region, the fiber management region, the cable leading-in path, and the fiber routing path are all disposed on the inner support container. The clamping apparatus protrudes from the bottom wall of the depression. A clamping groove is disposed in the clamping apparatus to clamp a splicing protection sleeve sleeved on the optical fiber.

With reference to the first aspect or the first to the sixth possible implementations of the first aspect, in a seventh possible implementation of the first aspect, the clamping apparatus includes two elastic arms. The two elastic arms are disposed with a distance therebetween to form the clamping groove. The elastic arms can elastically clamp the splicing protection sleeve sleeved on the optical fiber, thereby improving clamping reliability of the clamping apparatus.

With reference to the first aspect or the first to the seventh possible implementations of the first aspect, in an eighth possible implementation of the first aspect, the connection structure further includes a compression apparatus. An accommodating portion is disposed in a groove on the sidewall of the cable leading-in path. The stop portion is located between the accommodating portion and the depression. The compression apparatus is accommodated in the accommodating portion and fixed on the sidewall of the cable leading-in path. The compression apparatus is configured to compress the optical cable passing through the cable leading-in path.

With reference to the first aspect or the first to the eighth possible implementations of the first aspect, in an ninth possible implementation of the first aspect, the compression apparatus includes a compression block and an adjustment component. An adjustment hole is disposed through the compression block. The compression block is accommodated in the accommodating portion and is fixed on the sidewall of the cable leading-in path. The adjustment component passes through the adjustment hole in an adjustable manner. One end of the adjustment component away from the compression block is configured to compress the optical cable passing through the cable leading-in path. The adjustment component may adjust, by using the adjustment hole in the compression block, a tightening degree of abutting the optical cable, to accommodate optical cables with different shapes, for example, round or flat cables.

With reference to the first aspect or the first to the ninth possible implementations of the first aspect, in a tenth possible implementation of the first aspect, a clamping jaw is further disposed at an end of the inner support container along a circumferential direction of the inner support container, and the connection structure further includes a fastener. The fastener passes through the end of the inner support container. The clamping jaw clamps the fastener. The fastener is provided with a guide path. The guide path is coaxially disposed with and connected to the cable leading-in path in the inner support container. The fastener is fixed through clamping by using the clamping jaw, to facilitate assembly and disassembly of the optical cable.

With reference to the first aspect or the first to the tenth possible implementations of the first aspect, in a eleventh possible implementation of the first aspect, the connection structure further includes a sealing kit. The sealing kit is sleeved on the end of the inner support container in a sealing manner, and is configured to connect, in a sealing manner, to an inner wall of a protection sleeve sleeved on the inner support container, to implement sealing and prevent entrance of water vapor, dust, and the like.

With reference to the first aspect or the first to the eleventh possible implementations of the first aspect, in a twelfth possible implementation of the first aspect, a boss is disposed in the fiber management region of the connection structure, and is configured to wind the optical fiber to implement optical fiber storage.

In some examples, an optical cable connection box is provided, including the foregoing connection structure and a protection sleeve. The protection sleeve is sleeved on the connection structure.

According to the optical cable connection box provided in this application, the fiber routing path passing through the connection structure in the splicing region and the connection structure in the fiber management region is disposed in the connection structure, so that a redundant optical fiber can be transferred from the original splicing region to the fiber management region for storage. In this way, space of the connection structure can be effectively used, thereby reducing space occupied by the connection structure. In addition, instead of a flip structure, the protection sleeve is sleeved on the connection structure, thereby reducing space occupied by the optical cable connection box.

In some examples, the protection sleeve includes a first protection sleeve and a second protection sleeve. The first protection sleeve is sleeved on one end of the connection structure, and the second protection sleeve is sleeved on the other end of the connection structure and is screwed to the first protection sleeve, which facilitates disassembly and assembly of the optical cable connection box.

### BRIEF DESCRIPTION OF DRAWINGS

FIG. 1 is a schematic stereoscopic assembly diagram of an optical cable connection box;
FIG. 2 is a schematic diagram from another angle of view of the optical cable connection box shown in FIG. 1;
FIG. 3 is a schematic stereoscopic exploded view of the optical cable connection box shown in FIG. 1;
FIG. 4 is a schematic stereoscopic diagram of a connection structure of an optical cable connection box;
FIG. 5 is a schematic diagram from another angle of view of the connection structure shown in FIG. 4;
FIG. 6 is a cutaway diagram along a line I-I of the connection structure shown in FIG. 4;
FIG. 7 is a locally enlarged schematic diagram of the connection structure shown in FIG. 6;
FIG. 8 is a schematic stereoscopic diagram of a connection structure;
FIG. 9 is a locally enlarged schematic diagram of the connection structure shown in FIG. 8; and
FIG. 10 is a cutaway diagram along a line II-II of the connection structure shown in FIG. 8.

### DESCRIPTION OF EMBODIMENTS

Generally, an axial direction means a direction along a rotating central axis of a cylinder-like object, that is, a direction the same as the central axis; and a circumferential direction means a direction circling a central axis.

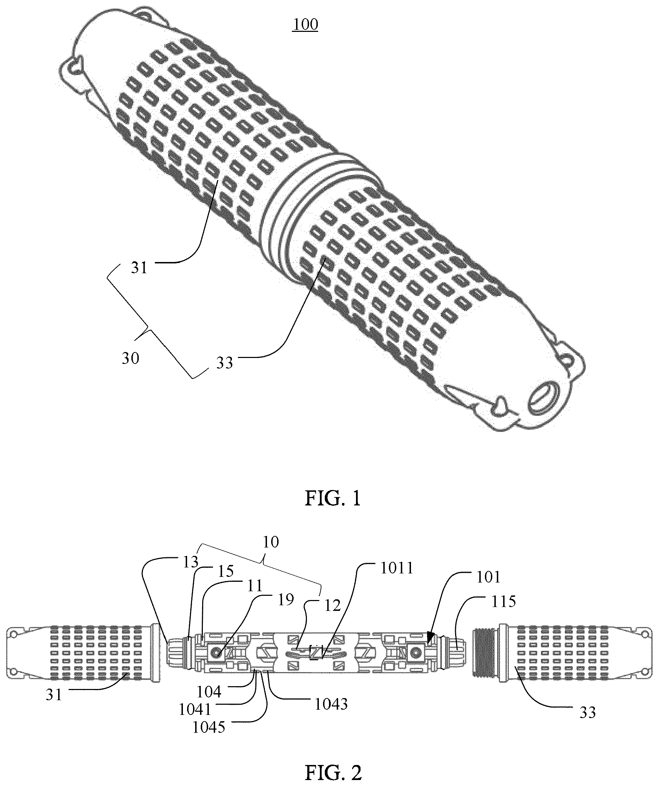

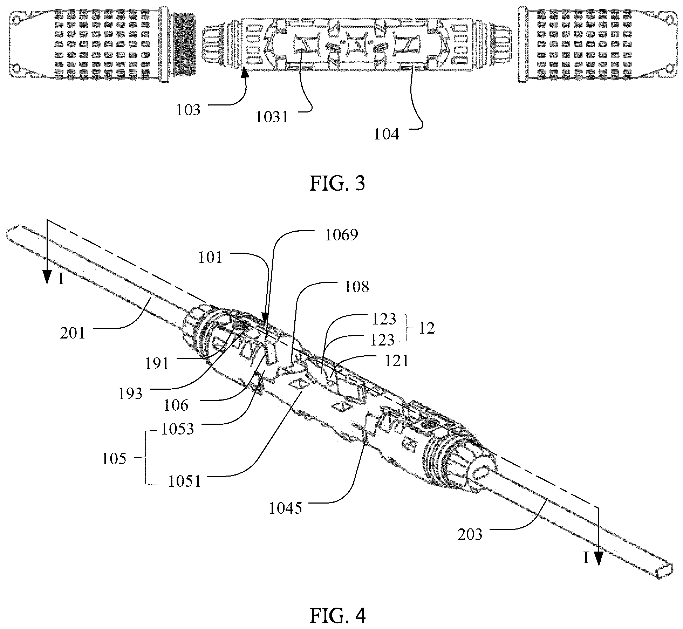

Referring to FIG. 1, FIG. 2, and FIG. 3, an optical cable connection box 100 includes a connection structure 10 and a protection sleeve 30 sleeved on the connection structure 10, to implement a protection function on different optical cables (201 and 203 shown in FIG. 4 to FIG. 6) after being connected to each other. The optical cable connection box 100 is configured to implement connection between single-core optical cables. The protection sleeve 30 includes a first protection sleeve 31 and a second protection sleeve 33. The first protection sleeve 31 is sleeved on one end of the connection structure 10, and the second protection sleeve 33 is sleeved on the other end of the connection structure 10 and is screwed to the first protection sleeve 33, which facilitates disassembly and assembly of the optical cable connection box 100. Because the first protection sleeve 31 and the second protection sleeve 33 are a sleeve structure instead of a conventional flip structure, space occupied by the optical cable connection box 100 is reduced. It may be understood that the first protection sleeve 31 and the second protection sleeve 33 are not limited to be screwed to each other, and the first protection sleeve 31 and the second protection sleeve 33 may also be connected in another manner, for example, through clamping. A structure of the protection sleeve 30 is not limited. For example, the protection sleeve 30 may alternatively be an entire sleeve.

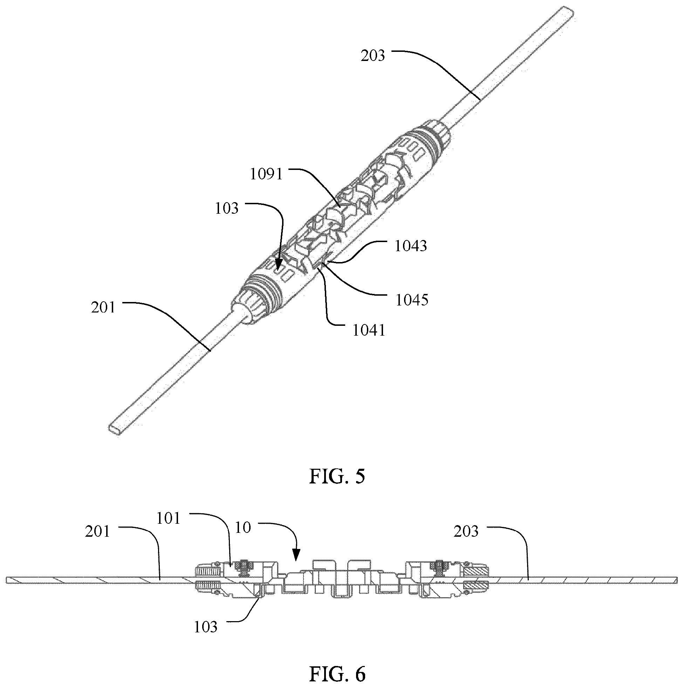

Referring to FIG. 4 and FIG. 5, the connection structure 10 includes a splicing region 101 and a fiber management region 103 that are disposed with a distance therebetween along a circumferential direction of the connection structure 10. In other words, the splicing region 101 and the fiber management region 103 are located on different planes. The splicing region 101 is used to splice optical fibers in different optical cables by using a splicing device, to implement connection between the different optical cables. The fiber management region 103 is used to store redundant optical fibers of the optical cables. A side that is of the connection structure 10 and on which the splicing region 101 is disposed is referred to as a front side, and a side that is of the connection structure 10 and on which the fiber management region 103 is disposed is referred to as a back side. In other words, the splicing region 101 is disposed on the front side of the connection structure 10, and the fiber management region 103 is disposed on the back side of the connection structure 10. It may be understood that, it is not limited that the splicing region 101 is disposed on the front side of the connection structure 10, and it is not limited that the fiber management region 103 is disposed on the back side of the connection structure 10. The splicing region 101 and the fiber management region 103 only need to be located on different planes.

The connection structure 10 further includes a fiber routing path 104 passing through the connection structure 10 in the splicing region 101 and the connection structure 10 in the fiber management region 103, so that an optical fiber can extend into the fiber management region 103 for storage through the fiber routing path 104 from the splicing region 101. The splicing region 101 and the fiber management region 103 are disposed with a distance therebetween along a circumferential direction of the connection structure 10. In this way, the splicing region 101 and the fiber management region 103 are located on different planes, so that optical fiber splicing and storage are not performed in a same region. Therefore, space of the connection structure 10 can be effectively used, and the connection structure 10 has a compact structure, thereby reducing a volume of the connection structure 10. In addition, optical fiber splicing and optical fiber storage are separated in the connection structure 10 according to functional regions, which facilitates work of an operator, thereby improving optical cable connection efficiency.

The fiber routing path 104 is disposed in a groove on an outer sidewall of the connection structure 10, to facilitate extension of the optical fiber. A first positioning plate 1041 and a second positioning plate 1043 protrude from a sidewall of the fiber routing path 104. The first positioning plate 1041 and the second positioning plate 1043 are disposed opposite each other, to prevent the optical fiber from coming out of the fiber routing path 104 and protect the optical fiber. A groove 1045 is formed between the first positioning plate 1041 and the second positioning plate 1043, to facilitate the optical fiber to enter the fiber routing path 104.

Referring to FIG. 4 again, a depression 105 is disposed in the splicing region 101 of the connection structure 10. The depression 105 includes a bottom wall 1051 and two sidewalls 1053. The bottom wall 1051 is connected between the two sidewalls 1053. A cable leading-in path 106 is further disposed in the connection structure 10. The cable leading-in path 106 passes through the sidewalls of the depression 105. The cable leading-in path 106 is located at an end of the connection structure 10. The cable leading-in path 106 is coaxially disposed with the connection structure 10, to dispose the optical cable. The cable leading-in path 106 is coaxially disposed with the connection structure 10. In other words, a central axis of the cable leading-in path 106 overlaps a central axis of the connection structure 10. In this way, a central axis of the optical cable passing through the cable leading-in path 106, the central axis of the cable leading-in path 106, and the central axis of the connection structure 10 can be overlapped, thereby improving transmission quality of an optical signal.

The connection structure 10 further includes a cabling path 108. The cabling path 108 is disposed in a groove on the bottom wall of the depression 105 close to the cable leading-in path 106. The cabling path 108 is connected to the fiber routing path 104. In this way, smooth cabling is implemented on the optical fiber, and a risk that the optical fiber is broken due to bending is reduced, thereby reducing a risk of a sudden change to an optical signal transmitted over the optical fiber.

A stop portion 1069 protrudes from a sidewall of the cable leading-in path 106 close to the depression 105, and is used to abut against the optical cable. For connection, an outer layer of the optical cable is partially stripped to expose the optical fiber. In this way, a stripping stop portion is formed on the optical cable. The stop portion 1069 is configured to abut against the stripping stop portion of the optical cable, to avoid forward movement of the optical cable, thereby improving connection reliability of the optical cable.

Referring to FIG. 5 again, a boss 1091 is disposed in the fiber management region 103 of the connection structure 10, and is configured to wind the optical fiber to implement optical fiber storage.

More specifically, referring to FIG. 2 again, the connection structure 10 includes an inner support container 11, a clamping apparatus 12, a fastener 13, a sealing kit 15, and a compression apparatus 19.

The splicing region 101, the fiber management region 103, the fiber routing path 104, and the cable leading-in path 106 are all disposed on the inner support container 11. The inner support container 11 is approximately a cylinder-like structure. A central axis of the inner support container 11 is the central axis of the connection structure 10.

The clamping apparatus 12 is disposed on the bottom wall 1051 of the depression 105. A clamping groove 121 (shown in FIG. 4) is disposed in the clamping apparatus 12 to clamp a splicing protection sleeve sleeved on the optical fiber. The clamping apparatus 12 is an elastic apparatus. Each clamping apparatus 12 includes two elastic arms 123. The two elastic arms 123 are disposed with a distance therebetween to form the clamping groove 121, to elastically clamp the splicing protection sleeve sleeved on the optical fiber. There are two clamping apparatuses 12. The two clamping apparatuses 12 are disposed with a distance therebetween to form a splicing card connector region 1011, to facilitate optical fiber splicing. The clamping groove 121 is disposed along an axial direction of the connection structure 10. It may be understood that a structure of the clamping apparatus 12 and a quantity of clamping apparatuses 12 are not limited, and the clamping apparatus 12 may be another elastic structure provided that the clamping apparatus 12 can clamp the splicing protection sleeve sleeved on the optical fiber. It may be understood that there may alternatively be more than two elastic arms 123 provided that the elastic arms 123 can clamp the splicing protection sleeve.

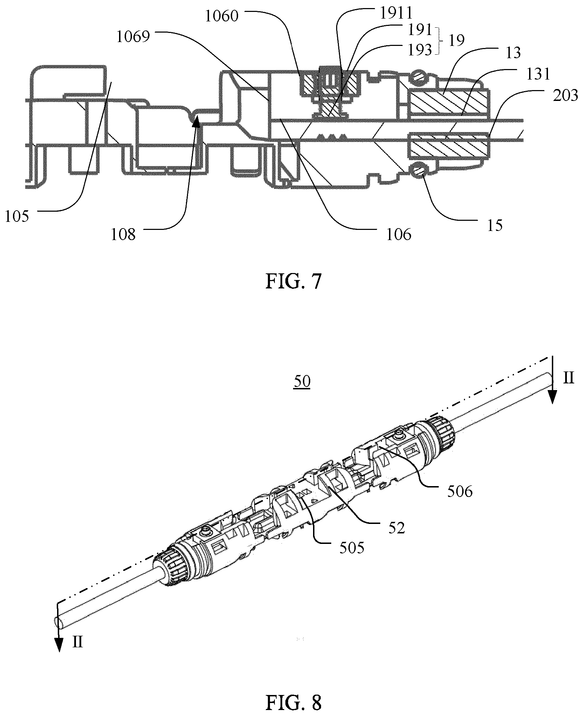

A plurality of clamping jaws 115 (shown in FIG. 2) are further disposed at an end of the inner support container 11 along a circumferential direction of the inner support container 11. The fastener 13 fixedly passes through the end of the inner support container 11. The clamping jaws 115 clamp the fastener 13. The fastener 13 is provided with a guide path 131 (shown in FIG. 7). The guide path 131 is coaxially disposed with and connected to the cable leading-in path 106. The guide path 131 is used to fasten the optical cable.

An accommodating portion 1060 (shown in FIG. 7) is disposed in a groove on the sidewall of the cable leading-in path 106. The stop portion 1069 is located between the accommodating portion 1061 and the depression 105. The compression apparatus 19 is accommodated in the accommodating portion 1060 and fixed on the sidewall of the cable leading-in path 106. The compression apparatus 19 is configured to abut the optical cable passing through the cable leading-in path 106 to compress the optical cable, thereby improving stability of the optical cable fastened to the inner support container 11.

The compression apparatus 19 includes a compression block 191 and an adjustment component 193. The compression block 191 is accommodated in the accommodating portion 1060. An adjustment hole 1911 is disposed through the compression block 191. The adjustment component 193 passes through the adjustment hole 1911 of the compression block 191. One end of the adjustment component 193 away from the compression block 191 is configured to abut the optical cable to compress the optical cable, thereby improving stability of the optical cable fastened to the inner support container 11. The adjustment component 193 may adjust, by using the compression block 191 and the accommodating portion 1060, a tightening degree of abutting the optical cable, to accommodate optical cables with different shapes, for example, round or flat cables. The adjustment hole 1911 is a threaded hole, and the adjustment component 193 is a threaded component. It may be understood that, it is not limited that the adjustment hole 1911 is a threaded hole, and it is not limited that the adjustment component 193 is a threaded component, provided that the adjustment component 193 can adjust, by using the adjustment hole 1911, the tightening degree of abutting the optical cable.

There are four fiber routing paths 104. The four fiber routing paths 104 are approximately disposed in four corners of the bottom wall 1051 of the depression 105. It may be understood that a quantity of fiber routing paths 104 is not limited. For example, the quantity of fiber routing paths 104 may alternatively be one, two, three, or five.

In an application scenario, a first optical cable 201 fixedly passes through the cable leading-in path 106 at an end of the connection structure 10, an optical fiber exposed when an outer layer of the first optical cable 201 is removed enters the splicing region 101 through the cable leading-in path 106, extends to the depression 105 through the cabling path 108, and enters the fiber management region 103 through the fiber routing path 104 for storage. Similarly, a second optical cable 203 fixedly passes through the cable leading-in path 106 at the other end of the connection structure 10, an optical fiber exposed when an outer layer of the second optical cable 203 is removed enters the splicing region 101 through the the cable leading-in path 106, extends to the depression 105 through the the cabling path 108, and enters the fiber management region 103 through the fiber routing path 104 for storage. After fiber management is completed, optical fiber directions of the optical fibers of the first optical cable 201 and the second optical cable 203 are guided to an axial direction through the fiber routing path 104 and the cabling path 108, that is, an optical cable leading-in direction. The optical fibers of the first optical cable 201 and the second optical cable 203 are connected by using the splicing protection sleeve. In addition, the optical fiber of the first optical cable and the optical fiber of the second optical cable are spliced by using a splicing device, so that the first optical cable 201 and the second optical cable 203 are connected and enter the clamping groove.

It may be understood that the optical cable connection box 100 may be alternatively configured to implement connection between multi-core optical cables.

It may be understood that the connection structure 10 may be an integrated structure.

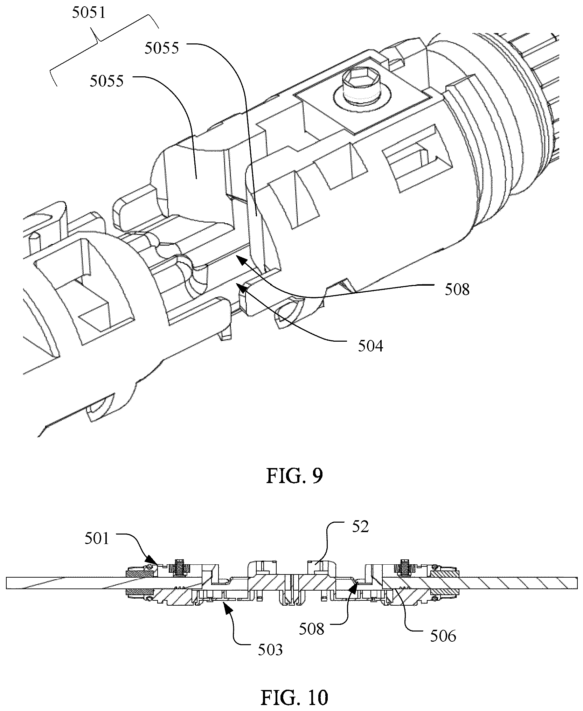

Referring to FIG. 8, FIG. 9, and FIG. 10, a connection structure 50 is provided being roughly the same as the connection structure illustrated in FIG. 1, FIG. 2, and FIG. 3. For example, the connection structure 50 includes a splicing region 501 and a fiber management region 503 that are disposed with a distance therebetween along a circumferential direction of the connection structure 50. A fiber routing path 504 passes through the connection structure 50 in the splicing region 501 and the connection structure 50 in the fiber management region 503. A depression 505 is disposed in the splicing region 501 on the connection structure 50. A cable leading-in path 506 passing through sidewalls of the depression 505 is disposed on the connection structure 50. A difference between the two connection structures is that a clamping apparatus 52 is a boss structure disposed on a bottom wall of the depression 505, and a clamping groove 512 is disposed on the clamping apparatus 52. A sidewall 5053 of the depression 505 includes a cushion surface 5055. The cushion surface 5055 is an arc surface protruding to an interior of the depression 505, and is used to cushion a bending angle of the optical fiber to prevent a sudden change to an optical signal.

The foregoing descriptions are not intended to limit the protection scope of this application. The scope of protection is defined by the appended claims.

## Claims

1. A connection structure (10), comprising a splicing region (101) and a fiber management region (103) that are disposed with a distance therebetween along a circumferential direction of the connection structure, wherein the connection structure is a cylinder-like object and the circumferential direction is a direction circling a central axis of the connection structure, wherein the splicing region is usable to splice optical fibers in different optical cables by using a splicing device to implement connection between the different optical cables and wherein the fiber management region is configured to store redundant optical fibers of the optical cables, wherein a fiber routing path (104) passing through the connection structure in the splicing region and the connection structure in the fiber management region is further disposed in the connection structure, so that an optical fiber extends into the fiber management region for storage through the fiber routing path from the splicing region, and wherein the fiber routing path is disposed in a groove on an outer sidewall of the connection structure,
**characterized in that**
a first positioning plate (1041) and a second positioning plate (1043) protrude from a sidewall of the fiber routing path, the first positioning plate and the second positioning plate are disposed opposite each other, to prevent the optical fiber from coming out of the fiber routing path (104) and protect the optical fiber, and an entering groove (1045) is formed between the first positioning plate and the second positioning plate, in order to facilitate the optical fiber to enter the fiber routing path (104).

2. The connection structure according claim 1, wherein a depression (105) is further disposed in the splicing region on the connection structure, the depression comprises two depression sidewalls (1053) and one bottom wall (1051), the bottom wall is connected between the two depression sidewalls, a cable leading-in path (106) is further disposed in the connection structure such that an optical cable fixedly passes through the cable leading-in path at an end of the connection structure, the cable leading-in path passes through the depression sidewalls, and the fiber routing path passes through the bottom wall of the depression.

3. The connection structure according to claim 2, wherein the cable leading-in path is located at the end of the connection structure, and the cable leading-in path is coaxially disposed with the connection structure.

4. The connection structure according to claim 3, wherein the connection structure further comprises a cabling path (108), the cabling path is disposed in a groove on the bottom wall of the depression close to the cable leading-in path, and the cabling path is connected to the fiber routing path, such that the optical fiber exposed when an outer layer of the optical cable is removed enters the splicing region through the cable leading-in path, extends to the depression through the cabling path, and enters the fiber management region through the fiber routing path for storage.

5. The connection structure according to claim 2, wherein at least one of the two depression sidewalls (1053) comprises a cushion surface (5055), and the cushion surface is an arc surface protruding to an interior of the depression.

6. The connection structure according to claim 2, wherein a stop portion (1069) protrudes from a sidewall of the cable leading-in path close to the depression, and is configured to abut against the optical cable.

7. The connection structure according to claim 2, wherein the connection structure comprises an inner support container (11) and a clamping apparatus (12), the splicing region, the fiber management region, the cable leading-in path, and the fiber routing path are all disposed on the inner support container, the clamping apparatus protrudes from the bottom wall of the depression, and a clamping groove is disposed in the clamping apparatus to clamp a splicing protection sleeve sleeved on the optical fiber.

8. The connection structure according to claim 7, wherein the clamping apparatus comprises two elastic arms (123), and the two elastic arms are disposed with a distance therebetween to form the clamping groove.

9. The connection structure according to claim 7, wherein the connection structure further comprises a compression apparatus, an accommodating portion is disposed in a groove on a sidewall of the cable leading-in path, the stop portion is located between the accommodating portion and the depression, the compression apparatus is accommodated in the accommodating portion and fixed on the sidewall of the cable leading-in path, and the compression apparatus is configured to compress the optical cable passing through the cable leading-in path.

10. The connection structure according to claim 9, wherein the compression apparatus comprises a compression block (191) and an adjustment component (193), an adjustment hole (1911) is disposed through the compression block, the compression block is accommodated in the accommodating portion and is fixed on the sidewall of the cable leading-in path, the adjustment component passes through the adjustment hole in an adjustable manner, and one end of the adjustment component away from the compression block is configured to compress the optical cable passing through the cable leading-in path.

11. The connection structure according to claim 7, wherein a clamping jaw (115) is further disposed at an end of the inner support container along a circumferential direction of the inner support container, the connection structure further comprises a fastener, the fastener passes through the end of the inner support container, the clamping jaw clamps the fastener, the fastener is provided with a guide path, and the guide path is coaxially disposed with and connected to the cable leading-in path in the inner support container, wherein the guide path is used to fasten the optical cable.

12. The connection structure according to claim 11, wherein the connection structure further comprises a sealing kit, and the sealing kit is sleeved on the end of the inner support container in a sealing manner and is disposed close to the clamping jaw, and is configured to connect, in a sealing manner, to an inner wall of a protection sleeve sleeved on the inner support container.

13. The connection structure according to claim 7, wherein a boss (1091) is disposed in the fiber management region of the connection structure, and is configured to wind the optical fiber to implement optical fiber storage.

## Patentansprüche

1. Verbindungsstruktur (10), die einen Spleißbereich (101) und einen Faserverwaltungsbereich (103), die mit einem Abstand zwischen diesen entlang einer Umfangsrichtung der Verbindungsstruktur angeordnet sind, umfasst, wobei die Verbindungsstruktur ein zylinderähnliches Objekt ist und die Umfangsrichtung eine Richtung ist, die eine Mittelachse der Verbindungsstruktur umkreist, wobei der Spleißbereich verwendbar ist, um optische Fasern in unterschiedlichen optischen Kabeln durch Verwenden einer Spleißvorrichtung zu spleißen, um eine Verbindung zwischen den unterschiedlichen optischen Kabeln umzusetzen, und wobei der Faserverwaltungsbereich konfiguriert ist, um redundante optische Fasern der optischen Kabel aufzubewahren, wobei ein Faserführungspfad (104), der durch die Verbindungsstruktur in dem Spleißbereich und die Verbindungsstruktur in dem Faserverwaltungsbereich verläuft, ferner in der Verbindungsstruktur angeordnet ist, sodass sich eine optische Faser in den Faserverwaltungsbereich für die Aufbewahrung durch den Faserführungspfad von dem Spleißbereich erstreckt, und wobei der Faserführungspfad in einer Nut an einer äußeren Seitenwand der Verbindungsstruktur angeordnet ist, **dadurch gekennzeichnet, dass**
eine erste Positionierungsplatte (1041) und eine zweite Positionierungsplatte (1043) aus einer Seitenwand des Faserführungspfads vorstehen, wobei die erste Positionierungsplatte und die zweite Positionierungsplatte einander gegenüberliegend angeordnet sind, um zu verhindern, dass die optische Faser aus dem Faserführungspfad (104) heraus kommt, und die optische Faser zu schützen, und wobei eine Eintrittsnut (1045) zwischen der ersten Positionierungsplatte und der zweiten Positionierungsplatte ausgebildet ist, um zu ermöglichen, dass die optische Faser in den Faserführungspfad (104) eintritt.

2. Verbindungsstruktur nach Anspruch 1, wobei eine Vertiefung (105) ferner in dem Spleißbereich auf der Verbindungsstruktur angeordnet ist, wobei die Vertiefung zwei Vertiefungsseitenwände (1053) und eine Bodenwand (1051) umfasst, die Bodenwand zwischen den zwei Vertiefungsseitenwänden verbunden ist, ein Kabeleinführungspfad (106) ferner in der Verbindungsstruktur angeordnet ist, derart, dass ein optisches Kabel durch den Kabeleinführungspfad an einem Ende der Verbindungsstruktur fixiert verläuft, der Kabeleinführungspfad durch die Vertiefungsseitenwände verläuft und der Faserführungspfad durch die Bodenwand der Vertiefung verläuft.

3. Verbindungsstruktur nach Anspruch 2, wobei sich der Kabeleinführungspfad an dem Ende der Verbindungsstruktur befindet und der Kabeleinführungspfad mit der Verbindungsstruktur koaxial angeordnet ist.

4. Verbindungsstruktur nach Anspruch 3, wobei die Verbindungsstruktur ferner einen Verkabelungspfad (108) umfasst, der Verkabelungspfad in einer Nut an der Bodenwand der Vertiefung in der Nähe des Kabeleinführungspfads angeordnet ist und der Verkabelungspfad mit dem Faserführungspfad verbunden ist, derart, dass die optische Faser, die freiliegt, wenn eine äußere Schicht des optischen Kabels entfernt wird, in den Spleißbereich durch den Kabeleinführungspfad eintritt, sich zu der Vertiefung durch den Verkabelungspfad erstreckt und in den Faserverwaltungsbereich durch den Faserführungspfad für die Aufbewahrung eintritt.

5. Verbindungsstruktur nach Anspruch 2, wobei mindestens eine der zwei Vertiefungsseitenwände (1053) eine Dämpfungsoberfläche (5055) umfasst und die Dämpfungsoberfläche eine Bogenoberfläche ist, die in einen Innenraum der Vertiefung vorsteht.

6. Verbindungsstruktur nach Anspruch 2, wobei ein Anschlagabschnitt (1069) aus einer Seitenwand des Kabeleinführungspfads in der Nähe der Vertiefung vorsteht und konfiguriert ist, um an dem optischen Kabel anzuliegen.

7. Verbindungsstruktur nach Anspruch 2, wobei die Verbindungsstruktur einen inneren Stützbehälter (11) und eine Klemmeinrichtung (12) umfasst, der Spleißbereich, der Faserverwaltungsbereich, der Kabeleinführungspfad und der Faserführungspfad alle auf dem inneren Stützbehälter angeordnet sind, die Klemmeinrichtung von der Bodenwand der Vertiefung vorsteht und eine Klemmnut in der Klemmeinrichtung angeordnet ist, um eine Spleißschutzhülse, die die optische Faser ummantelt, festzuklemmen.

8. Verbindungsstruktur nach Anspruch 7, wobei die Klemmeinrichtung zwei elastische Arme (123) umfasst und die zwei elastischen Arme mit einem Abstand zwischen diesen angeordnet sind, um die Klemmnut auszubilden.

9. Verbindungsstruktur nach Anspruch 7, wobei die Verbindungsstruktur ferner eine Kompressionseinrichtung umfasst, ein Aufnahmeabschnitt in einer Nut auf einer Seitenwand des Kabeleinführungspfads angeordnet ist, der Anschlagabschnitt sich zwischen dem Aufnahmeabschnitt und der Vertiefung befindet, die Kompressionseinrichtung in dem Aufnahmeabschnitt aufgenommen und auf der Seitenwand des Kabeleinführungspfads fixiert ist und die Kompressionsvorrichtung konfiguriert ist, um das optische Kabel, das durch den Kabeleinführungspfad verläuft, zu komprimieren.

10. Verbindungsstruktur nach Anspruch 9, wobei die Kompressionseinrichtung einen Kompressionsblock (191) und eine Einstellkomponente (193) umfasst, ein Einstellloch (1911) durch den Kompressionsblock angeordnet ist, der Kompressionsblock in dem Aufnahmeabschnitt aufgenommen ist und auf der Seitenwand des Kabeleinführungspfads fixiert ist, die Einstellkomponente durch das Einstellloch auf einstellbare Weise verläuft und ein Ende der Einstellkomponente, das von dem Kompressionsblock entfernt ist, konfiguriert ist, um das optische Kabel, das durch den Kabeleinführungspfad verläuft, zu komprimieren.

11. Verbindungsstruktur nach Anspruch 7, wobei eine Klemmbacke (115) ferner an einem Ende des inneren Stützbehälters entlang einer Umfangsrichtung des inneren Stützbehälters angeordnet ist, die Verbindungsstruktur ferner ein Befestigungselement umfasst, das Befestigungselement durch das Ende des inneren Stützbehälters verläuft, die Klemmbacke das Befestigungselement festklemmt, das Befestigungselement mit einem Führungspfad versehen ist und der Führungspfad koaxial zu dem Kabeleinführungspfad in dem inneren Stützbehälter angeordnet und mit diesem verbunden ist, wobei der Führungspfad verwendet wird, um das optische Kabel zu befestigen.

12. Verbindungsstruktur nach Anspruch 11, wobei die Verbindungsstruktur ferner ein Dichtungsset umfasst und das Dichtungsset das Ende des inneren Stützbehälters auf eine abdichtende Weise ummantelt und in der Nähe der Klemmbacke angeordnet ist und konfiguriert ist, um auf eine abdichtende Weise mit einer Innenwand einer Schutzhülse, die den inneren Stützbehälter ummantelt, verbunden zu werden.

13. Verbindungsstruktur nach Anspruch 7, wobei ein Vorsprung (1091) in dem Faserverwaltungsbereich der Verbindungsstruktur angeordnet ist und konfiguriert ist, um die optische Faser aufzuwickeln, um die Aufbewahrung der optischen Faser umzusetzen.

## Revendications

1. Structure de connexion (10), comprenant une région d'épissage (101) et une région de gestion de fibres (103) qui sont disposées avec une distance entre elles le long d'une direction circonférentielle de la structure de connexion, dans laquelle la structure de connexion est un objet en forme de cylindre et la direction circonférentielle est une direction entourant un axe central de la structure de connexion, dans laquelle la région d'épissage est utilisable pour épisser des fibres optiques dans différents câbles optiques en utilisant un dispositif d'épissage pour mettre en oeuvre la connexion entre les différents câbles optiques et dans laquelle la région de gestion de fibres est configurée pour stocker des fibres optiques redondantes des câbles optiques, dans laquelle un chemin d'acheminement de fibres (104) traversant la structure de connexion dans la région d'épissage et la structure de connexion dans la région de gestion de fibres est en outre disposé dans la structure de connexion, de sorte qu'une fibre optique s'étende dans la région de gestion de fibres pour le stockage à travers le chemin d'acheminement de fibres depuis la région d'épissage, et dans laquelle le chemin d'acheminement de fibres est disposé dans une rainure sur une paroi latérale extérieure de la structure de connexion,
**caractérisée en ce que**
une première plaque de positionnement (1041) et une seconde plaque de positionnement (1043) dépassent d'une paroi latérale du chemin d'acheminement de fibres, la première plaque de positionnement et la seconde plaque de positionnement sont disposées à l'opposé l'une de l'autre, pour empêcher la fibre optique de sortir du chemin d'acheminement de fibres (104) et protéger la fibre optique, et une rainure d'entrée (1045) est formée entre la première plaque de positionnement et la seconde plaque de positionnement, afin de faciliter l'entrée de la fibre optique dans le chemin d'acheminement de fibres (104).

2. Structure de connexion selon la revendication 1, dans laquelle une dépression (105) est en outre disposée dans la région d'épissage sur la structure de connexion, la dépression comprend deux parois latérales
de dépression (1053) et une paroi inférieure (1051), la
paroi inférieure est reliée entre les deux parois latérales
de dépression, un chemin d'entrée de câble (106) est en outre disposé dans la structure de connexion de telle sorte qu'un câble optique passe de manière fixe par le chemin d'entrée de câble à une extrémité de la structure de connexion, que le chemin d'entrée de câble passe au travers des parois latérales de dépression et que le chemin d'acheminement de fibres passe au travers de la paroi inférieure de la dépression.

3. Structure de connexion selon la revendication 2, dans laquelle le chemin d'entrée de câble est situé à l'extrémité de la structure de connexion, et le chemin d'entrée de câble est disposé coaxialement avec la structure de connexion.

4. Structure de connexion selon la revendication 3, dans laquelle la structure de connexion comprend en outre un chemin de câblage (108), le chemin de câblage est disposé dans une rainure sur la paroi inférieure de la dépression près du chemin d'entrée de câble, et le chemin de câblage est connecté au chemin d'acheminement de fibres, de sorte que la fibre optique exposée lorsqu'une couche externe du câble optique est retirée entre dans la région d'épissage par le chemin d'entrée de câble, s'étend jusqu'à la dépression par le chemin de câblage, et entre dans la région de gestion de fibres par le chemin d'acheminement de fibres pour être stockée.

5. Structure de connexion selon la revendication 2, dans laquelle au moins l'une des deux parois latérales de dépression (1053) comprend une surface de coussin (5055), et la surface de coussin est une surface en arc faisant saillie vers un intérieur de la dépression.

6. Structure de connexion selon la revendication 2, dans laquelle une partie d'arrêt (1069) fait saillie d'une paroi latérale du chemin d'entrée de câble près de la dépression, et est configurée pour s'appuyer contre le câble optique.

7. Structure de connexion selon la revendication 2, dans laquelle la structure de connexion comprend un conteneur de support interne (11) et un appareil de serrage (12), la région d'épissage, la région de gestion de fibres, le chemin d'entrée de câble, et le chemin d'acheminement de fibres sont tous disposés sur le conteneur de support interne, l'appareil de serrage fait saillie de la paroi inférieure de la dépression, et une rainure de serrage est disposée dans l'appareil de serrage pour serrer un manchon de protection d'épissure manchonné sur la fibre optique.

8. Structure de connexion selon la revendication 7, dans laquelle l'appareil de serrage comprend deux bras élastiques (123), et les deux bras élastiques sont disposés avec une distance entre eux pour former la rainure de serrage.

9. Structure de connexion selon la revendication 7, dans laquelle la structure de connexion comprend en outre un appareil de compression, une partie de logement est disposée dans une rainure sur une paroi latérale du chemin d'entrée de câble, la partie d'arrêt est située entre la partie de logement et la dépression, l'appareil de compression est logé dans la partie de logement et fixé sur la paroi latérale du chemin d'entrée de câble, et l'appareil de compression est configuré pour comprimer le câble optique passant à travers le chemin d'entrée de câble.

10. Structure de connexion selon la revendication 9, dans laquelle l'appareil de compression comprend un bloc de compression (191) et un composant d'ajustement (193), un trou d'ajustement (1911) est disposé à travers le bloc de compression, le bloc de compression est logé dans la partie de logement et est fixé sur la paroi latérale du chemin d'entrée de câble, le composant de réglage passe à travers le trou de réglage de manière réglable, et une extrémité du composant de réglage éloignée du bloc de compression est configurée pour comprimer le câble optique passant à travers le chemin d'entrée de câble.

11. Structure de connexion selon la revendication 7, dans laquelle une mâchoire de serrage (115) est en outre disposée à une extrémité du conteneur de support interne le long d'une direction circonférentielle du conteneur de support interne, la structure de connexion comprend en outre une attache, l'attache passe au travers de l'extrémité du conteneur de support interne, la mâchoire de serrage serre l'attache, l'attache est pourvue d'un chemin de guidage, et le chemin de guidage est disposé coaxialement avec et connecté au chemin d'entrée de câble dans le conteneur de support interne, dans laquelle le chemin de guidage est utilisé pour attacher le câble optique.

12. Structure de connexion selon la revendication 11, dans laquelle la structure de connexion comprend en outre un kit d'étanchéité, et le kit d'étanchéité est manchonné sur l'extrémité du conteneur de support interne de manière étanche et est disposé à proximité de la mâchoire de serrage, et est configuré pour se connecter, de manière étanche, à une paroi intérieure d'un manchon de protection manchonné sur le conteneur de support interne.

13. Structure de connexion selon la revendication 7, dans laquelle un bossage (1091) est disposé dans la région de gestion de fibres de la structure de connexion, et est configuré pour enrouler la fibre optique afin de mettre en œuvre le stockage de la fibre optique.
